# EUROPÄISCHE PATENTSCHRIFT

(11) **EP 2 622 364 B1**
(45) Veröffentlichungstag und Bekanntmachung des Hinweises auf die Patenterteilung: **08.10.2014**
(21) Anmeldenummer: 11767594.2
(22) Anmeldetag: 08.09.2011
(51) Int. Cl.: G02B 26/10, G02B 26/12, G01S 7/481, G06K 7/10

(54) **STRAHLABLENKEINRICHTUNG FÜR EINEN LASERSCANNER**
BEAM DEFLECTING DEVICE FOR A LASER SCANNER
DISPOSITIF DE DÉVIATION DE FAISCEAU POUR UN SCANNER LASER

(30) Priorität: 28.09.2010 AT 16162010
(43) Veröffentlichungstag der Anmeldung: 07.08.2013
(73) Patentinhaber: Riegl Laser Measurement Systems GmbH, 3580 Horn (AT)
(72) Erfinder: RIEGL, Johannes, A-3754 Trabenreith (AT); REICHERT, Rainer, A-3580 Horn (AT)
(74) Vertreter: Weiser, Andreas
(86) Internationale Anmeldenummer: PCT/AT2011/000366
(87) Internationale Veröffentlichungsnummer: WO 2012/040749

(56) Entgegenhaltungen:
- WO-A1-89/05991
- DE-A1- 2 235 582
- GB-A- 2 224 132
- US-A- 3 602 571
- US-A- 4 934 780
- US-A- 6 098 885

## Beschreibung

Die vorliegende Erfindung betrifft eine Strahlablenkeinrichtung für einen Laserscanner, mit einer auf einer drehbaren Welle montierten Spiegelpyramide, deren Pyramidenachse die Drehachse und deren dazu geneigte Pyramidenseiten ihre Spiegelflächen bilden. Die Erfindung betrifft ferner einen mit einer solchen Strahlablenkeinrichtung ausgestatteten Laserscanner.

Derartige Spiegelpyramiden werden in Laserscannern verwendet, um einen etwa axialparallel auf eine Spiegelfläche gerichteten Laserabtaststrahl durch Drehen der Spiegelpyramide periodisch über einen Abtastwinkelbereich zu verschwenken, wodurch sich ein ebener oder gekrümmter Abtastfächer ergibt. Wird die Spiegelpyramide mit unterschiedlich stark geneigten Pyramidenseiten bzw. Spiegelflächen versehen, können sogar mehrere voneinander divergierende Abtastfächer ausgesandt werden. Einen solchen Scanner zeigt z.B. die US-6.098.885, die auch zur Abgrenzung in der zweiteiligen Form dient.

Die Fertigung von Spiegelpyramiden mit unterschiedlich geneigten Spiegelflächen wirft Probleme auf, wenn mehr als drei Seiten mit mehr als zwei verschiedenen Neigungen ausgebildet werden sollen und dabei die Abtastfächer und damit die Spiegelflächen gleiche Winkelsektoren abdecken sollen: Die unterschiedlichen Neigungen der Pyramidenseiten führen hier zu rückspringenden Kanten bzw. Stufen an den Verbindungsstellen der Pyramidenseiten, was eine spanende Oberflächenbearbeitung der Pyramidenseiten zur Herstellung der Neigungen und Spiegelflächen erschwert und das Polieren der Spiegelflächen unmöglich macht.

Die Erfindung setzt sich zum Ziel, eine Strahlablenkeinrichtung für einen Laserscanner zu schaffen, mit der mehrere voneinander divergierende Abtastfächer erzeugt werden können und die dabei auf einfache Weise gefertigt werden kann.

Dieses Ziel wird mit einer Strahlablenkeinrichtung der einleitend genannten Art erreicht, die sich gemäß der Erfindung dadurch auszeichnet, dass die Welle zumindest ein radial abstehendes optisch brechendes Element trägt, das Lichtstrahlen in jeder die Drehachse enthaltenden Ebene in der Art eines Prismas bricht und das im Strahlengang des Laserscanners gesehen einer Spiegelfläche der Spiegelpyramide vorgesetzt ist.

Auf diese Weise wird einzelnen Spiegelflächen der Spiegelpyramide ein zusätzliches Strahlablenkprisma vorgeordnet, so dass die Kombination aus Prisma und Spiegelfläche die optische Wirkung einer Spiegelpyramide mit unterschiedlich geneigten Pyramidenseiten ergibt, ohne jedoch die mit solchen Spiegelpyramiden verbundenen Fertigungsprobleme zu erfahren.

Bevorzugt ist im Strahlengang des Laserscanners gesehen jedes optisch brechende Element seiner Spiegelfläche im Wesentlichen deckungsgleich vorgesetzt, um eine gleichmäßige Strahlablenkung während der Drehung der Spiegelpyramide ohne Störeffekte beim Übergang von einer Spiegelfläche zur nächsten zu erhalten.

Günstig ist es, wenn zumindest zwei optisch brechende Elemente gleichmäßig über den Umfang der Welle verteilt sind, so dass sich eine ausgewuchtete Anordnung ergibt.

Mit Hilfe der Erfindung können unterschiedliche Spiegelpyramiden modular mit unterschiedlichen optisch brechenden Elementen zusammengesetzt werden, um eine beliebige Anzahl von verschiedenen Abtastfächern zu erzeugen. Zu diesem Zweck wird insbesondere vorgesehen, dass zumindest zwei optisch brechende Elemente unterschiedliche optische Brechkraft, und/oder zumindest zwei Pyramidenseiten der Spiegelpyramide unterschiedliche Neigung haben.

Gemäß einem weiteren bevorzugten Merkmal der Erfindung ist jedes optisch brechende Element auf seiner in Drehrichtung der Welle führenden Kante aerodynamisch geformt, um den Luftwiderstand bei der Drehung zu verringern.

Eine weitere bevorzugte Ausführungsform der Erfindung besteht darin, dass mehrere optisch brechende Elemente an ihren radial innenliegenden Seiten axial hintereinander auf die Welle aufgefädelt sind, was eine modulare Fertigung und Bestückung der Strahlablenkeinrichtung ermöglicht. Bevorzugt hat jedes optisch brechende Element etwa die Form eines Kegel- oder Pyramidensektors, was seine Fertigung vereinfacht.

In einem weiteren Aspekt schafft die Erfindung auch einen Laserscanner mit einem Strahlengang von einem Lasersender zu einem Laserempfänger und mit einer im Strahlengang liegenden Strahlablenkeinrichtung der hier vorgestellten Art. Gemäß einer bevorzugten Ausführungsform verläuft der Strahlengang vom Lasersender bis zur Strahlablenkeinrichtung in einem Parallelabstand zur Drehachse der Strahlablenkeinrichtung, was Verzerrungen der von der Strahlablenkeinrichtung erzeugten Lichtfächer minimiert.

Die Erfindung wird nachstehend anhand von in den beigeschlossenen Zeichnungen dargestellten Ausführungsbeispielen näher erläutert. In den Zeichnungen zeigen

Fig. 1 den Einsatzbereich einer Spiegelpyramide im Rahmen eines ausschnittsweise und schematisch dargestellten Laserscanners in einer Perspektivansicht;
die Fig. 2 und 3 eine erste Ausführungsform einer Strahlablenkeinrichtung gemäß der Erfindung in einer teilweise geschnittenen Seitenansicht und in einer Draufsicht; und
die Fig. 4 und 5 eine zweite Ausführungsform der Strahlablenkeinrichtung der Erfindung in einer Seitenansicht und in einer Draufsicht.

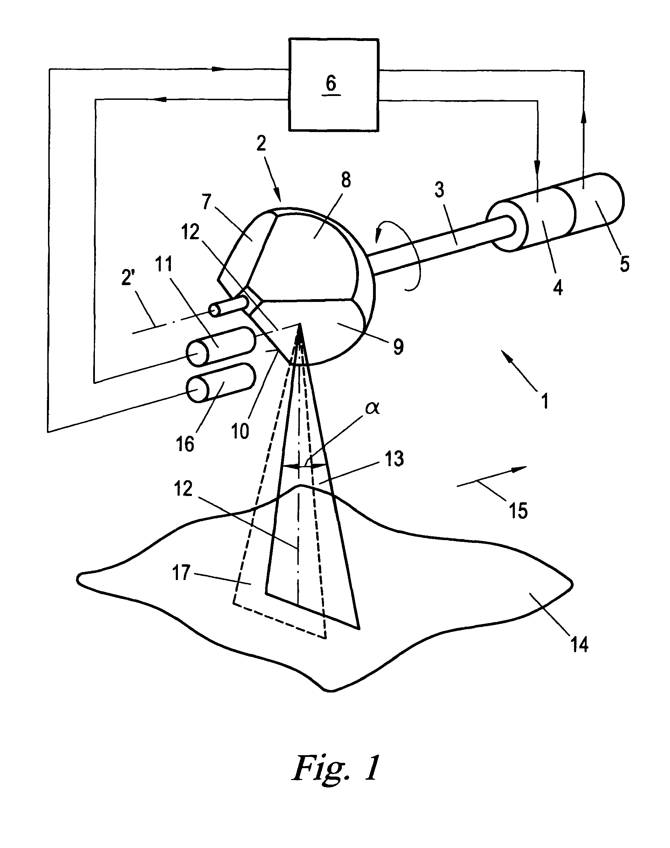

Fig. 1 zeigt schematisch einen Laserscanner 1, der eine Spiegelpyramide 2 umfasst, welche auf einer Welle 3 montiert ist und von einem Motor 4 gedreht wird. An den Motor 4 ist ein Drehwinkelkodierer bzw. -sensor 5 angeflanscht, welcher die aktuelle Stellung der Spiegelpyramide 2 misst bzw. kodiert und an eine Elektronikeinheit 6 signalisiert.

Die Spiegelpyramide 2 hat die Form einer vierseitigen Pyramide, deren Pyramidenachse 2' ihre Drehachse ist. Die zur Drehachse 2' geneigten Pyramidenseiten 7 - 10 bilden die Spiegelflächen der Spiegelpyramide 2.

Die Spiegelflächen 7 - 10 werden beispielsweise durch Spanen, Fräsen, Schleifen, Polieren, Honen und/oder Läppen der Seiten eines pyramidenförmigen Voll- oder Hohlkörpers, welcher die Spiegelpyramide 2 aufbaut, gefertigt. Alternativ oder zusätzlich könnten die Spiegelflächen auch durch Beschichten, Bedampfen, Bekleben usw. der Pyramidenseiten mit hochreflektierendem Material aufgebaut werden.

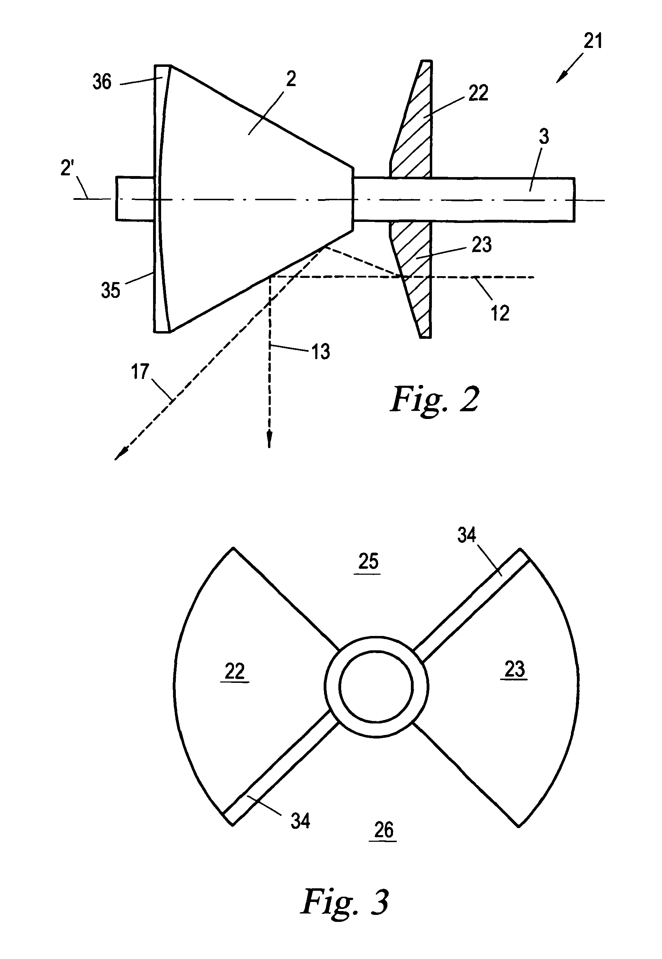

Es versteht sich, dass in der vorliegenden Beschreibung unter dem Begriff "Pyramidenform" bzw. "Spiegelpyramide" jede beliebige Art von Pyramide mit beliebiger polygonzugförmiger Grundfläche (Basis) verstanden wird, u.zw. sowohl gerade als auch "schiefe" Pyramiden (Pyramidenachse nicht senkrecht zur Grundachse), regelmäßige als auch unregelmäßige Pyramiden, spitze oder "stumpfe" Pyramiden ("Pyramidenstumpfe"), sowie auch solche Pyramiden, die an ihrer Spitze und/oder Basis beschnitten sind, wie die in den Fig. 1 und 2 gezeigten Pyramiden, deren Basis kreisförmig beschnitten ist, um den Luftwiderstand bei der Drehung zu verringern.

Auf die Spiegelpyramide 2 ist ein Lasersender 11 gerichtet, der einen Laserstrahl 12 auf die Spiegelflächen 7 - 10 aussendet, u.zw. auf jeweils eine während deren Drehung, so dass der Laserstrahl 12 durch die Drehbewegung der Spiegelpyramide 2 periodisch über einen Abtastwinkel α verschwenkt wird, um einen Abtastfächer 13 zu bilden. Mit dem Abtastfächer 13 kann beispielsweise eine Oberfläche 14 "zeilenweise" abgetastet werden, wenn der Abtastfächer 13, d.h. der gesamte Laserscanner 1, in einer abtastebenenfremden Richtung 15, z.B. normal zum Abtastfächer 13, über die Oberfläche 14 bewegt wird.

Die Reflexionen des Laserstrahls 12 bzw. Abtastfächers 13 von der Oberfläche 14 werden mit einem Laserempfänger 16 detektiert, der die reflektierten Strahlen - wieder über den Weg der Spiegelpyramide 2 - zurückempfängt, in elektrische Signale umwandelt und der Elektronikeinheit 6 zur Auswertung zuführt. Letztere steuert dazu den Lasersender 11 entsprechend an, z.B. getriggert, gepulst, moduliert usw., wie in der Technik bekannt.

Die hier betrachtete Spiegelpyramide 2 ist von einer speziellen Art, u.zw. hat zumindest eine der Pyramidenseiten 7 - 10 eine andere Neigung gegenüber der Drehachse 2' als die übrigen Pyramidenseiten 7 - 10. Dadurch ergeben sich bei der Drehung der Spiegelpyramide 2 nicht nur ein einziger Abtastfächer 13, sondern je nach Anzahl der Neigungen zwei, drei oder mehr Abtastfächer 13, 17 usw., die voneinander divergieren. Laserscanner dieser Art werden für unterschiedliche Anwendungszwecke benötigt, beispielsweise zur Erfassung von Hinterschneidungen der Oberfläche 14 für Kompensations- oder Differenzmessungen durch zweimaliges Abtasten derselben Oberfläche 14 od.dgl.

Um die genannten Fertigungsprobleme für eine Spiegelpyramide 2 mit einer Mehrzahl unterschiedlich geneigter Pyramidenseiten bzw. Spiegelflächen 7 - 10 zu vermeiden, wird gemäß der Erfindung anstelle der einzeln eingesetzten Spiegelpyramide 2 von Fig. 1 eine kombinierte Strahlablenkeinrichtung 21 in den Laserscanner 1 eingesetzt, von der ein erstes Ausführungsbeispiel in den Fig. 2 und 3 gezeigt wird.

Gemäß den Fig. 2 und 3 umfasst die Strahlablenkeinrichtung 21 einerseits eine Spiegelpyramide 2 von der unter Bezugnahme auf Fig. 1 erörterten Art und andererseits zumindest ein bzw. hier zwei optisch brechende Elemente 22, 23, die der Spiegelpyramide 2 im Strahlengang des Laserstrahls 12 vorgeordnet sind. Wie in Fig. 2 gezeigt, bricht jedes der Elemente 22, 23 Lichtstrahlen - wie den Laserstrahl 12 - in jeder die Drehachse 2' enthaltenden Ebene in der Art eines optisch brechenden Prismas. Gemäß den Fig. 2 und 3 hat jedes Element 22, 23 dazu bevorzugt etwa die Form eines Kegel- oder Pyramidensektors.

Die optisch brechenden Elemente 22, 23 sitzen auf derselben Welle 3 wie die Spiegelpyramide 2 und werden mit dieser mitgedreht, wobei sie jeweils - im Strahlengang des Laserscanners gesehen - deckungsgleich über einer der Spiegelflächen 7 - 10 der Spiegelpyramide 2 liegen. Im gezeigten Beispiel sind zwei Elemente 22, 23 vorgesehen, die diametral auf der Welle 3 sitzen, beispielsweise mit Hilfe einer gemeinsamen, zentralen Nabe 24, über welche sie an der Welle 3 angreifen. Alternativ könnte jedes Element 22, 23 mit einer eigenen Nabe, Klemme, einem Bolzen usw. an der Welle 3 befestigt sein.

Durch die diametrale Anordnung der optisch brechenden Elemente 22, 23 verbleiben zwischen diesen Lücken 25, 26. Die Elemente 22, 23 liegen beispielsweise deckungsgleich über den Spiegelflächen 7, 9 und die Lücken 25, 26 deckungsgleich über den Spiegelflächen 8, 10. Bei der Drehung der Strahlablenkeinrichtung 21 gegenüber dem Laserscanner 11 tritt somit der Laserstrahl 12 bei der Passage der Spiegelflächen 8, 10 durch die Lücken 25, 26, um beispielsweise den Abtastfächer 13 zu erzeugen. Bei der Passage der Spiegelflächen 7, 9 wird der Laserstrahl 12 von den Elementen 22, 23 gebrochen und trifft somit unter einem anderen Winkel auf die Spiegelflächen 7, 9 auf, um den divergierenden Abtastfächer 17 zu erzeugen.

Wenn Elemente 22, 23 mit einer Spiegelpyramide 2 kombiniert werden, welche Spiegelflächen 7 - 10 mit unterschiedlichen Neigungen besitzt, kann die Anzahl der divergierenden Abtastfächer 13, 17 usw. vervielfacht werden: Beispielsweise können die Spiegelflächen 7, 8 eine erste Neigung und die Spiegelflächen 9, 10 eine zweite Neigung gegenüber der Drehachse 2' haben. In Verbindung mit optisch brechenden Elementen 22, 23, welche den Spiegelflächen 7, 9 vorgesetzt sind, ergeben sich somit vier Kombinationen, d.h. vier unterschiedliche optische Pfade und damit vier verschiedene Abtastfächer wie folgt:
- Prismenbrechung durch 22, erste Spiegelneigung durch 7;
- keine Prismenbrechung, erste Spiegelneigung durch 8;
- Prismenbrechung durch 23, zweite Spiegelneigung durch 9;
- keine Prismenbrechung, zweite Spiegelneigung durch 10.

Es versteht sich, dass dieses Konzept entsprechend vervielfältigt werden kann. So können Spiegelpyramiden mit drei, fünf, sechs bzw. Spiegelflächen mit einem, drei, vier usw. optisch brechenden Elementen kombiniert werden, wobei die Spiegelflächen verschiedene Neigungen - soweit fertigbar - einnehmen können und mit Elementen mit unterschiedlichen optischen Brechkräften, sei es durch entsprechende Keilwinkel oder durch entsprechende Brechungsindizes der verwendeten optischen Materialien, kombiniert werden können. Auch Prismen-Keilwinkel in der entgegengesetzten Radialrichtung, so dass die optisch brechenden Elemente an ihrem radial äußeren Rand dicker sind als an ihrem radial inneren Ende, sind möglich.

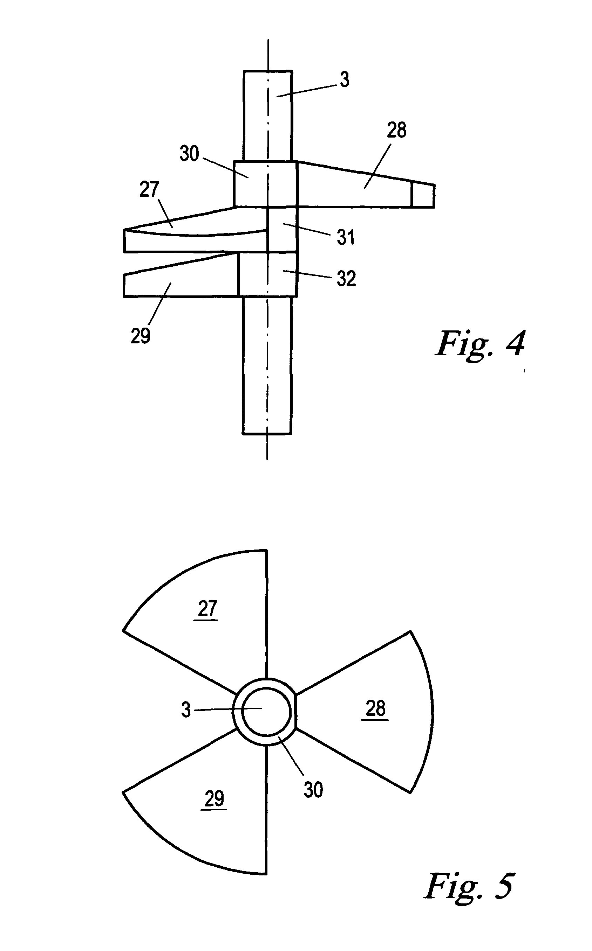

Die Fig. 4 und 5 zeigen ein Beispiel einer möglichen Kombination von drei optisch brechenden Elementen 27 - 29, die jeweils über eine eigene Nabe 30 - 32 auf der Welle 3 sitzen und einer (nicht gezeigten) sechsseitigen Spiegelpyramide 2 analog zu Fig. 1 vorgesetzt sind. Jeder zweiten Spiegelfläche der Spiegelpyramide 2 ist damit ein Element 27 - 29 vorgesetzt. Die Elemente 27 - 29 können jeweils eine unterschiedliche optische Brechkraft haben, so dass bei Kombination mit einer Spiegelpyramide 2 mit gleichen Neigungen z.B. vier Abtastfächer oder bei Kombination mit einer Spiegelpyramide 2 mit unterschiedlich geneigten Spiegelflächen bis zu sechs Abtastfächer ausgesandt werden können.

Wenn die Elemente 27 - 29 wie in den Fig. 4 und 5 gezeigt axial hintereinanderliegend auf die Welle 3 aufgefädelt werden, haben bevorzugt die der Spiegelpyramide 2 näherliegenden Elemente eine höhere optische Brechkraft als die der Spiegelpyramide 2 entfernter liegenden, um die unterschiedliche axiale Weglänge des gebrochenen Laserstrahls vom jeweiligen Element bis zur jeweiligen Spiegelfläche etwas auszugleichen.

Die optisch brechenden Elemente 22, 23, 27 - 29 können jeweils an ihrer in Drehrichtung der Welle 3 gesehenen führenden Kante 33, 34 abgeschrägt bzw. aerodynamisch geformt sein, in der Art der Vorderkante eines Tragflächenprofils, um den Luftwiderstand der Strahlablenkeinrichtung 21 bei ihrer Drehung zu verringern. Aus demselben Grund wird die Spiegelpyramide 2 an ihrer Basis 35 bevorzugt kreisförmig (bzw. zylindrisch) beschnitten, wodurch sich dort ein kurzer zylindermantelförmiger Rand 36 einstellt, um den Luftwiderstand zu verringern.

Als Material für die optisch brechenden Elemente 22, 23, 27 - 29 eignet sich bevorzugt höherbrechendes Spezialglas, das entsprechend gefräst und poliert wird.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Strahlablenkeinrichtung (21) für einen Laserscanner (1), mit einer auf einer drehbaren Welle (3) montierten Spiegelpyramide (2), deren Pyramidenachse (2') die Drehachse und deren dazu geneigte Pyramidenseiten (7 - 10) ihre Spiegelflächen bilden, **dadurch gekennzeichnet, dass** die Welle (3) zumindest ein radial abstehendes optisch brechendes Element trägt, das Lichtstrahlen in jeder seiner die Drehachse (2') enthaltenden Ebenen in der Art eines Prismas bricht und das im Strahlengang des Laserscanners (1) und in Drehachsenrichtung gesehen über einer Spiegelfläche (7 - 10) der Spiegelpyramide (2) liegt.

2. Strahlablenkeinrichtung nach Anspruch 1, **dadurch gekennzeichnet, dass** im Strahlengang des Laserscanners (1) und in Drehachsenrichtung gesehen jedes optisch brechende Element (22, 23, 27 - 29) seiner Spiegelfläche (7 - 10) im Wesentlichen deckungsgleich vorgesetzt ist.

3. Strahlablenkeinrichtung nach Anspruch 1 oder 2, **dadurch gekennzeichnet, dass** zumindest zwei optisch brechende Elemente (22, 23, 27 - 29) gleichmäßig über den Umfang der Welle (3) verteilt sind.

4. Strahlablenkeinrichtung nach einem der Ansprüche 1 bis 3, **dadurch gekennzeichnet, dass** zumindest zwei optisch brechende Elemente (22, 23, 27 - 29) unterschiedliche optische Brechkraft haben.

5. Strahlablenkeinrichtung nach einem der Ansprüche 1 bis 4, **dadurch gekennzeichnet, dass** zumindest zwei Pyramidenseiten (7 - 10) der Spiegelpyramide (2) unterschiedliche Neigung haben.

6. Strahlablenkeinrichtung nach einem der Ansprüche 1 bis 5, **dadurch gekennzeichnet, dass** jedes optisch brechende Element (22, 23, 27 - 29) auf seiner in Drehrichtung der Welle (3) führenden Kante (34) aerodynamisch geformt ist.

7. Strahlablenkeinrichtung nach einem der Ansprüche 1 bis 6, **dadurch gekennzeichnet, dass** mehrere optisch brechende Elemente (27 - 29) an ihren radial innenliegenden Seiten axial hintereinander auf die Welle (3) aufgefädelt sind.

8. Strahlablenkeinrichtung nach einem der Ansprüche 1 bis 7, **dadurch gekennzeichnet, dass** jedes optisch brechende Element (22, 23, 27 - 29) etwa die Form eines Kegel- oder Pyramidensektors hat.

9. Laserscanner (1) mit einem Strahlengang (12, 13, 17) von einem Lasersender (11) zu einem Laserempfänger (16) und einer im Strahlengang (12, 13, 17) liegenden Strahlablenkeinrichtung (21) nach einem der Ansprüche 1 bis 8.

10. Laserscanner nach Anspruch 9, **dadurch gekennzeichnet, dass** der Strahlengang (12) vom Lasersender (11) bis zur Strahlablenkeinrichtung (21) in einem Parallelabstand zur Drehachse (2') der Strahlablenkeinrichtung (21) verläuft.

## Claims

1. Beam deflection device (21) for a laser scanner (1), with a mirror pyramid (2) mounted on a rotatable shaft (3), whose pyramid axis (2') constitutes the axis of rotation and its thereto inclined pyramid sides (7 - 10) constitute its mirror surfaces, **characterized in that** the shaft (3) carries at least one radially protruding optically refracting element, which refracts light beams in each one of its planes containing the axis of rotation (2') in the manner of a prism and which lies in the beam path of the laser scanner (1) and, seen in the direction of the axis of rotation, above a mirror area (7 - 10) of the mirror pyramid (2).

2. Beam deflection device according to claim 1, **characterized in that** each optically refracting element (22, 23, 27 - 29) is aligned, substantially congruently, in front of its mirror surface (7 - 10), seen in the direction of the axis of rotation, in the beam path of the laser scanner (1).

3. Beam deflection device according to claim 1 or 2, **characterized in that** at least two optically refracting elements (22, 23, 27 - 29) are equally distributed over the circumference of the shaft (3).

4. Beam deflection device according to any one of the claims 1 to 3, **characterized in that** at least two optically refracting elements (22, 23, 27 - 29) have different refractive powers.

5. Beam deflection device according to any one of the claims 1 to 4, **characterized in that** at least two pyramid sides (7 - 10) of the mirror pyramid (2) have a different inclination.

6. Beam deflection device according to any one of the claims 1 to 5, **characterized in that** each optically refracting element (22, 23, 27 - 29) is aerodynamically formed on its edge (34) leading in the direction of rotation of the shaft (3).

7. Beam deflection device according to any one of the claims 1 to 6, **characterized in that** multiple optically refracting elements (27 - 29) are threaded axially in succession onto the shaft (3) on their radially inner sides.

8. Beam deflection device according to any one of the claims 1 to 7, **characterized in that** each optically refracting element (22, 23, 27 - 29) has approximately the form of a cone sector or pyramid sector.

9. Laser scanner with a beam path (12, 13, 17) from a laser emitter (11) to a laser receptor (16) an a beam deflection device (21) in the beam path (12, 13, 17) according to any of the claims 1 to 8.

10. Laser scanner according to claim 9, **characterized in that** the beam path (12) runs at a parallel distance to the axis of rotation of the beam deflection device (21) from the laser emitter (11) up to the beam deflection device (21).

## Revendications

1. Dispositif de déflexion de faisceaux (21) pour un scanner laser (1), avec une pyramide de miroirs (2) montée sur un arbre rotatif (3), dont l'axe de pyramide (2') forme l'axe de rotation et dont les côtés de pyramide (7 - 10) inclinés par rapport à celui-ci forment ses surfaces de miroir, **caractérisé en ce que** l'arbre (3) porte au moins un élément optiquement réfringent faisant saillie radialement, lequel réfracte des faisceaux lumineux dans chacun de ses plans contenant l'axe de rotation (2'), à la façon d'un prisme, et lequel se trouve sur le chemin optique du scanner laser (1) et au-dessus d'une surface de miroir (7 - 10) de la pyramide de miroirs (2), vu dans la direction de l'axe de rotation.

2. Dispositif de déflexion de faisceaux selon la revendication 1, **caractérisé en ce que** sur le chemin optique du scanner laser (1) chaque élément optiquement réfringent (22, 23, 27 - 29) est avancé de façon coïncidente par rapport à sa surface de miroir (7 - 10), vu dans la direction de l'axe de rotation.

3. Dispositif de déflexion de faisceaux selon la revendication 1 ou 2, **caractérisé en ce qu'**au moins deux éléments optiquement réfringents (22, 23, 27 - 29) sont répartis uniformément sur le pourtour de l'arbre (3).

4. Dispositif de déflexion de faisceaux selon l'une des revendications 1 à 3, **caractérisé en ce qu'**au moins deux éléments optiquement réfringents (22, 23, 27 - 29) présentent des puissances optiques différentes.

5. Dispositif de déflexion de faisceaux selon l'une des revendications 1 à 4, **caractérisé en ce qu'**au moins deux côtés de pyramide (7 - 10) de la pyramide de miroirs (2) présentent des inclinaisons différentes.

6. Dispositif de déflexion de faisceaux selon l'une des revendications 1 à 5, **caractérisé en ce que** chaque élément optiquement réfringent (22, 23, 27 - 29) est formé de façon aérodynamique sur son bord avant (34) dans le sens de rotation de l'arbre (3).

7. Dispositif de déflexion de faisceaux selon l'une des revendications 1 à 6, **caractérisé en ce que** plusieurs éléments optiquement réfringents (27 - 29) sont enfilés sur l'arbre (3) axialement les uns derrière les autres, de leurs côtés radialement intérieurs.

8. Dispositif de déflexion de faisceaux selon l'une des revendications 1 à 7, **caractérisé en ce que** chaque élément optiquement réfringent (22, 23, 27 - 29) présente approximativement la forme d'un secteur de cône ou de pyramide.

9. Scanner laser (1) avec un chemin optique (12, 13, 17) entre un émetteur laser (11) et un récepteur laser (16), et un dispositif de déflexion de faisceaux (21) selon l'une des revendications 1 à 8, situé sur le chemin optique (12, 13, 17).

10. Scanner laser selon la revendication 9, **caractérisé en ce que** le chemin optique (12) s'étend de l'émetteur laser (11) jusqu'au dispositif de déflexion de faisceaux (21) avec un espacement parallèle par rapport à l'axe de rotation (2') du dispositif de déflexion de faisceaux (21).
